# EUROPÄISCHE PATENTSCHRIFT

(11) **EP 3 528 063 B1**
(45) Veröffentlichungstag und Bekanntmachung des Hinweises auf die Patenterteilung: **05.08.2020**
(21) Anmeldenummer: 18156637.3
(22) Anmeldetag: 14.02.2018
(51) Int. Cl.: G05B 13/04

(54) **VERFAHREN ZUR RECHNERGESTÜTZTEN ERSTELLUNG EINES PROGNOSEMODELLS ZUR PROGNOSE VON EINER ODER MEHREREN ZIELGRÖSSEN**
METHOD FOR THE COMPUTER-AIDED CREATION OF A FORECAST MODEL FOR FORECASTING ONE OR MORE TARGET VARIABLES
PROCÉDÉ DE CRÉATION ASSISTÉE PAR ORDINATEUR D'UN MODÈLE PRONOSTIQUE DESTINÉ AU PRONOSTIC D'UNE OU PLUSIEURS GRANDEURS CIBLES

(43) Veröffentlichungstag der Anmeldung: 21.08.2019
(73) Patentinhaber: Siemens Aktiengesellschaft, 80333 München (DE)
(72) Erfinder: Grothmann, Ralph, 80796 München (DE); Sutor, Ariane, 81543 München (DE)

(56) Entgegenhaltungen:
- EP-A2- 1 717 736
- US-A1- 2008 183 444

## Beschreibung

Die Erfindung betrifft ein Verfahren zur rechnergestützten Erstellung eines Prognosemodells zur Prognose von einer oder mehreren Zielgrößen. Ferner betrifft die Erfindung ein Verfahren zur Prognose von einer oder mehreren Zielgrößen mittels des erstellten Prognosemodells sowie ein Computerprogrammprodukt und ein Computerprogramm.

In einer Vielzahl von Anwendungsgebieten besteht das Bedürfnis, unbekannte Zielgrößen basierend auf bekannten Eingangsgrößen geeignet zu prognostizieren. Zum Beispiel ist es im Betrieb eines technischen Systems oftmals wünschenswert, Steuergrößen des technischen Systems in Abhängigkeit von der Entwicklung gewisser Parameter, wie z.B. Temperatur, Druck, und dergleichen, zu variieren. Ebenso gibt es Ansätze, gemäß denen die Wartungsintervalle eines technischen Systems in Abhängigkeit von prognostizierten Größen, wie z.B. Verschleiß von Teilen, festzulegen sind.

Zur Vorhersage von Zielgrößen sind aus dem Stand der Technik simulationsbasierte und datenbasierte Modelle bekannt. Bei simulationsbasierten Modellen wird zur Ermittlung einer Prognose versucht, die tatsächlichen Wirkmechanismen möglichst genau zu erfassen und geeignet mathematisch zu beschreiben, so dass der Zusammenhang zwischen Zielgrößen und Eingangsgrößen analytisch modelliert wird. Beispielsweise beruhen simulationsbasierten Modelle auf einem physikalischen oder statistischen Modell.

Im Unterschied zu simulationsbasierten Modellen wird bei der datengetriebenen Modellierung versucht, basierend auf tatsächlichen Beobachtungen das künftige Verhalten von Zielgrößen zu prognostizieren. Hierfür ist es erforderlich, dass bereits Beobachtungsdaten in der Form von Trainingsdatensätzen vorliegen. Ein jeweiliger Trainingsdatensatz gibt dabei für bekannte Eingangsgrößen die tatsächlich aufgetretenen Zielgrößen an.

Zur Erstellung von datengetriebenen Modellen werden Verfahren aus dem Bereich des maschinellen Lernens verwendet, die das Verhalten bzw. die Entwicklung von Zielgrößen aus beobachteten Trainingsdaten lernen, so dass das gelernte Modell neue Zielgrößen aus unbekannten Eingangsgrößen vorhersagen kann. Eine besonders geeignete Klasse von maschinellen Lernverfahren sind neuronale Netze, die bei geeigneter Modellierung die Beobachtungsdaten exakt abbilden können. Dafür werden gewisse internen Variablen geeignet iterativ bestimmt (d.h. gelernt).

Simulationsbasierte und datengetriebene Modelle haben jeweils charakteristische Vor- und Nachteile. Simulationsbasierte Modelle benötigen a priori keine Trainingsdaten und sind durch explizite Modellannahmen, welche entsprechende Wirkmechanismen beschreiben, gut zu interpretieren. Sie haben jedoch den Nachteil, dass häufig vereinfachende Annahmen erforderlich sind, um zu berechenbaren Modellen zu gelangen. Ferner kann nicht garantiert werden, dass das Modell auch tatsächlich die Wirklichkeit richtig beschreibt.

Datengetriebene Modelle ermöglichen eine exakte Anpassung an entsprechende Trainingsdaten, so dass implizit alle tatsächlichen bisherigen Einflüsse geeignet berücksichtigt werden.

In der Praxis liefern datengetriebene Modelle gute Ergebnisse. Im Gegensatz zu simulationsbasierten Modellen sind datengetriebene Modelle jedoch schwierig zu interpretieren. Insbesondere sind in solchen Modellen verarbeitete interne Variablen nicht beobachtbar und diese Variablen können ggf. physikalisch unsinnig sein. EP1717736 beschreibt ein Verfahren und ein System zur prädiktiven Modellierung.

Aufgabe der Erfindung ist es, ein Verfahren zur rechnergestützten Erstellung eines Prognosemodells zu schaffen, in dem ein simulationsbasiertes Modell und ein datengetriebenes Modell geeignet kombiniert sind.

Das erfindungsgemäße Verfahren dient zur rechnergestützten Erstellung eines Prognosemodells zur Prognose von einer oder mehreren Zielgrößen, wobei die Zielgröße oder die Zielgrößen ein Zielvektor bilden, dem ein Eingangsvektor aus einer oder mehreren Eingangsgrößen zugeordnet ist. Mittels des Prognosemodells können dabei die Zielgröße oder die Zielgrößen des Zielvektors basierend auf der oder den Eingangsgrößen des zugeordneten Eingangsvektors prognostiziert werden.

Die Zielgröße bzw. die Zielgrößen sowie die Eingangsgröße bzw. die Eingangsgrößen stellen erfindungsgemäß entsprechende Variablen dar, die mit Werten belegt werden können. Dabei können die Werte der Zielgröße bzw. Zielgrößen des Zielvektors basierend auf entsprechenden Werten der Eingangsgröße bzw. Eingangsgrößen des Eingangsvektors vorhergesagt werden. Mit anderen Worten ist somit unter einer Prognose von einer oder mehreren Zielgrößen die Vorhersage von Werten dieser Zielgrößen basierend auf entsprechenden Werten von Eingangsgrößen zu verstehen.

Im Rahmen des erfindungsgemäßen Verfahrens werden sowohl ein simulationsbasiertes Modell als auch ein datengetriebenes Modell zur Prognose eines Zielvektors basierend auf einem zugeordneten Eingangsvektor bereitgestellt. Das simulationsbasierte Modell beschreibt dabei den Zusammenhang zwischen Zielvektoren und zugeordneten Eingangsvektoren (d.h. entsprechenden Werten von Zielgrößen und Eingangsgrößen) analytisch. Demgegenüber ist das datengetriebene Modell basierend auf einer Mehrzahl von Trainingsdatensätzen gelernt, wobei ein jeweiliger Trainingsdatensatz einen beobachteten Zielvektor und einen zugeordneten beobachteten Eingangsvektor umfasst.

Im erfindungsgemäßen Verfahren wird basierend auf einer Mehrzahl von Validierungsdatensätzen, die jeweils einen beobachteten Zielvektor und einen zugeordneten beobachteten Eingangsvektor umfassen, ein erstes Prognosefehlermaß für das simulationsbasierte Modell ermittelt. Das erste Prognosefehlermaß umfasst einen oder mehrere Fehlerwerte und hängt von jeweiligen Prognosefehlern des simulationsbasierten Modells für jeweilige Validierungsdatensätze der Mehrzahl von Validierungsdatensätzen ab. Ein Prognosefehler beschreibt dabei die Abweichung eines mit dem simulationsbasierten Modell prognostizierten Zielvektors vom Zielvektor im entsprechenden Validierungsdatensatz. Beispielsweise kann die Abweichung durch einen euklidischen Abstand repräsentiert werden. Prognosefehler können ggf. auch vorzeichenbehaftet sein, um hierdurch beispielsweise anzugeben, ob eine Zielgröße mit dem simulationsbasierten Modell über- oder unterschätzt wird.

Im erfindungsgemäßen Verfahren wird ferner basierend auf der Mehrzahl von Validierungsdatensätzen ein zweites Prognosefehlermaß für das datengetriebene Modell ermittelt, das ebenfalls ein oder mehrere Fehlerwerte umfasst. Dabei sind zumindest ein Teil und insbesondere alle Validierungsdatensätze unterschiedlich zu den Trainingsdatensätzen, mit denen das datengetriebene Modell gelernt ist. In Analogie zum ersten Prognosefehlermaß hängt das zweite Prognosefehlermaß von jeweiligen Prognosefehlern des datengetriebenen Modells für jeweilige Validierungsdatensätze der Mehrzahl von Validierungsdatensätzen ab. Wie das erste Prognosefehlermaß kann das zweite Prognosefehlermaß z.B. über einen euklidischen Abstand definiert sein. Ebenso kann das zweite Prognosefehlermaß ggf. vorzeichenbehaftet sein.

Schließlich werden im erfindungsgemäßen Verfahren basierend auf einer vorgegebenen Regel, die von dem ersten und dem zweiten Prognosefehlermaß abhängt, ein erstes Gewicht und ein zweites Gewicht bestimmt bzw. festgelegt. Der Begriff der Bestimmung der Gewichte ist hier und im Folgenden weit zu verstehen. Insbesondere fällt hierunter ggf. auch die Festlegung von Gewichten, die variable Faktoren enthalten können, wie beispielsweise ein vorbekanntes Merkmal des zu prognostizierenden Zielvektors, wie weiter unten noch beschrieben wird. Basierend auf diesen Gewichten wird das Prognosemodell derart festgelegt, dass ein durch das Prognosemodell prognostizierter Zielvektor eine gewichtete Kombination ist, die gebildet ist aus einem ersten Vektor in der Form eines Zielvektors, der mit dem simulationsbasierten Modell aus dem zugeordneten Eingangsvektor prognostiziert wird, und einem zweiten Vektor in der Form eines Zielvektors, der mit dem datengetriebenen Modell aus dem gleichen zugeordneten Eingangsvektor wie das simulationsbasierte Modell prognostiziert wird. Dabei ist der erste Vektor in der gewichteten Kombination mit dem ersten Gewicht und der zweite Vektor mit dem zweiten Gewicht gewichtet. Die Gewichte können unterschiedlich definiert sein. Vorzugsweise handelt es sich um positive Werte. Insbesondere kann jedes der Gewichte einen prozentualen Wert zwischen 0% und 100% angeben, wobei die Summe der beiden prozentualen Werte 100% entspricht.

Das erfindungsgemäße Verfahren weist den Vorteil auf, dass in einem Prognosemodell sowohl ein simulationsbasiertes als auch ein datengetriebenes Modell unter Berücksichtigung ihrer Prognosefehler geeignet kombiniert werden, wodurch die Vorhersage von Zielgrößen verbessert werden kann.

Je nach Ausgestaltung kann das obige erste bzw. zweite Prognosefehlermaß unterschiedlich definiert sein. In einer Variante enthält das erste Prognosefehlermaß jeweils als Fehlerwerte die Menge aller Prognosefehler des simulationsbasierten Modells für die Mehrzahl von Validierungsdatensätzen. Analog kann das zweite Prognosefehlermaß jeweils als Fehlerwerte die Menge aller Prognosefehler des datengetriebenen Modells für die Mehrzahl von Validierungsdatensätzen enthalten. In einer anderen Variante enthält das erste und/oder das zweite Prognosefehlermaß jeweils als Fehlerwert einen Mittelwert (insbesondere den arithmetischen Mittelwert) der Prognosefehler des simulationsbasierten bzw. datengetriebenen Modells für die Mehrzahl von Validierungsdatensätzen. Ebenso ist es möglich, dass das erste und/oder das zweite Prognosefehlermaß jeweils mehrere Mittelwerte (insbesondere arithmetische Mittelwerte) der Prognosefehler des simulationsbasierten bzw. des datengetriebenen Modells enthält, wobei die jeweiligen Mittelwerte über jeweilige (vorzugsweise disjunkte) Teilmengen der Mehrzahl von Validierungsdatensätzen gemittelt sind.

In einer weiteren Variante des erfindungsgemäßen Verfahrens hängt die vorgegebene Regel neben dem ersten und zweiten Prognosefehlermaß auch von einem vorbekannten Merkmal des durch das Prognosemodell zu prognostizierenden Zielvektors ab. Das vorbekannte Merkmal ist dabei keine Zielgröße.

In einer weiteren Variante ist jedem Zielvektor (d.h. sowohl dem prognostizierten Zielvektor als auch den Zielvektoren gemäß den Trainingsdaten und Validierungsdaten) jeweils ein Zeitpunkt seines Auftretens zugeordnet. Auf diese Weise können mit dem erfindungsgemäßen Verfahren Zeitreihen verarbeitet werden. Der Zeitpunkt des Auftretens des durch das Prognosemodell zu prognostizierenden Zielvektors kann das oben genannte vorbekannte Merkmal darstellen, von dem das Prognosemodell zusätzlich abhängt.

In einer weiteren Variante wiederholen sich die Zeitpunkte des Auftretens der jeweiligen Zielvektoren periodisch. Beispielsweise können die Zeitpunkte des Auftretens die Uhrzeiten eines Tages darstellen, welche sich nach 24 Stunden wiederholen.

In einer weiteren bevorzugten Variante wird eine Zeitreihe mit sich periodisch wiederholenden Auftretenszeitpunkten von Zielvektoren mit einem ersten bzw. zweiten Prognosefehlermaß kombiniert, die jeweils als Fehlerwerte die Menge aller Prognosefehler des simulationsbasierten bzw. datengetriebenen Modells für die Mehrzahl von Validierungsdatensätzen enthalten. Dabei berücksichtigt die vorgegebene Regel zur Bestimmung des ersten und zweiten Gewichts (vorzugsweise ausschließlich) solche Fehlerwerte aus dem ersten und zweiten Prognosefehlermaß, die zu einem Zielvektor in der Mehrzahl von Validierungsdatensätzen gehören, der den gleichen Zeitpunkt des Auftretens wie der zu prognostizierende Zielvektor hat. Es werden somit Zeitpunkte aus den Validierungsdatensätzen in geeigneter Weise mit dem zu prognostizierten Zielvektor in Beziehung gesetzt.

In einer weiteren Variante des erfindungsgemäßen Verfahrens umfasst der Eingangsvektor, der einem durch das Prognosemodell zu prognostizierenden Zielvektor zugeordnet ist, eine oder mehrere prädizierte Eingangsgrößen, die für den Zeitpunkt des Auftretens des Zielvektors prädiziert sind. Wie weiter unten erwähnt, können die prädizierten Eingangsgrößen z.B. Wetterdaten darstellen, über welche die elektrische Stromleistung einer regenerativen Energieerzeugungsanlage, wie z.B. einer Photovoltaikanlage oder einer Windkraftanlage, prognostiziert werden.

In einer weiteren Variante des erfindungsgemäßen Verfahrens ist die vorgegebene Regel derart ausgestaltet, dass für jeden durch das Prognosemodell zu prognostizierenden Zielvektor oder alternativ bei Vorliegen einer vorgegebenen Bedingung das erste Gewicht und zweite Gewicht derart festgelegt werden, dass das erste Gewicht auf Eins und das zweite Gewicht auf Null gesetzt wird, wenn der oder ein Fehlerwert des ersten Prognosefehlermaßes betragsmäßig kleiner als der oder ein entsprechender Fehlerwert des zweiten Prognosefehlermaßes ist, und das erste Gewicht auf Null und das zweite Gewicht auf Eins gesetzt wird, wenn der oder ein Fehler des ersten Prognosefehlermaßes betragsmäßig größer als der oder ein entsprechender Fehlerwert des zweiten Prognosefehlermaßes ist. In dieser Variante wird als Prognosefehlermaß vorzugsweise der Mittelwert über alle Prognosefehler der Validierungsdatensätze verwendet.

Sind die entsprechenden Fehlerwerte vorzeichenbehaftet, liegt die obige vorgegebene Bedingung vorzugsweise dann vor, wenn die zur Bestimmung des ersten und zweiten Gewichts miteinander verglichenen Fehlerwerte das gleiche Vorzeichen aufweisen. Sollten das erste Prognosefehlermaß und das zweite Prognosefehlermaß gleich groß sein, kann beispielswese vorab festgelegt sein, welches Gewicht auf Null und welches Gewicht auf Eins im Falle von identischen Prognosefehlermaßen gesetzt werden soll.

In einer weiteren Ausführungsform des erfindungsgemäßen Verfahrens ist die vorgegebene Regel derart ausgestaltet, dass für jeden durch das Prognosemodell zu prognostizierenden Zielvektor oder bei Vorliegen einer vorbestimmten Bedingung das erste Gewicht und zweite Gewicht mit einer Rechenvorschrift bestimmt werden, gemäß der das erste Gewicht umso größer wird, je kleiner der Betrag des oder eines Fehlerwerts des ersten Prognosefehlermaßes wird, und gemäß der das zweite Gewicht umso größer wird, je kleiner der Betrag des oder eines Fehlerwerts des zweiten Prognosefehlermaßes wird.

Sind die Fehlerwerte vorzeichenbehaftet, liegt die vorbestimmte Bedingung insbesondere dann vor, wenn die zur Bestimmung des ersten und zweiten Gewichts miteinander verglichenen Fehlerwerte unterschiedliche Vorzeichen aufweisen. Hierdurch wird eine geeignete Gewichtung des simulationsbasierten und datengetriebenen Modells dann erreicht, wenn das eine Modell den Zielvektor überschätzt und das andere Modell den Zielvektor unterschätzt.

In einer weiteren Variante gibt das simulationsbasierte Modell ein erstes Schwankungsmaß für den prognostizierten ersten Vektor aus. Ebenso gibt das datengetriebene Modell ein zweites Schwankungsmaß für den prognostizierten zweiten Vektor aus. Das Schwankungsmaß, das auch als Konfidenzmaß bezeichnet werden kann, repräsentiert dabei die Unsicherheit in der entsprechenden Prognose. Je größer das Schwankungsmaß ist, desto größer ist die Unsicherheit. Die Bestimmung entsprechender Schwankungsmaße durch ein simulationsbasiertes bzw. datengetriebenes Modell ist an sich bekannt. Das Schwankungsmaß kann z.B. die Varianz einer stochastischen Verteilung darstellen. In einer Ausführungsform des erfindungsgemäßen Verfahrens kann das obige Schwankungsmaß geeignet bei der Bestimmung der Gewichte berücksichtigt werden. Dabei wird das erste Gewicht mit zunehmendem ersten Schwankungsmaße immer kleiner und analog nimmt das zweite Gewicht mit zunehmendem zweiten Schwankungsmaß ab. Demzufolge haben unsichere Prognosen in dem erstellten Prognosemodell weniger Gewicht.

Das im erfindungsgemäßen Verfahren verwendete simulationsbasierte Modell kann beliebig ausgestaltet sein. In einer Variante beschreibt das simulationsbasierte Modell physikalische Zusammenhänge zwischen Zielvektoren und zugeordneten Eingangsvektoren. Ebenso kann das datengetriebene Modell auf beliebigen maschinellen Lernverfahren beruhen. Insbesondere umfasst das datengetriebene Modell ein oder mehrere (gelernte) neuronale Netze.

Das erfindungsgemäße Verfahren kann zur Prognose von beliebigen Zielgrößen aus Eingangsgrößen verwendet werden. Vorzugsweise ist das Prognosemodell jedoch dazu eingerichtet, eine oder mehrere Zielgrößen eines technischen Systems basierend auf einer oder mehreren Eingangsgrößen des technischen Systems vorherzusagen. Diese Vorhersage kann beispielsweise im Rahmen einer Steuerung des technischen Systems genutzt werden.

Das technische System, für welches das Prognosemodell erstellt wird, kann beliebig ausgestaltet sein. In einer bevorzugten Variante umfasst das technische System eine Energieerzeugungsanlage und insbesondere eine regenerative Energieerzeugungsanlage. Insbesondere kann dabei der mit dem Prognosemodell zu prognostizierende Zielvektor als eine Zielgröße die durch die regenerative Energieerzeugungsanlage erzeugte Stromleistung zu einem zukünftigen Zeitpunkt umfassen, wohingegen der zugeordnete Eingangsvektor als eine oder mehrere Eingangsgrößen zu dem zukünftigen Zeitpunkt vorliegende Wetterdaten, beispielsweise Umgebungstemperatur, Windstärke, Sonneneinstrahlung, beinhalten kann. Die regenerative Energieerzeugungsanlage ist beispielsweise eine Photovoltaikanlage oder eine Windkraftanlage.

Neben dem oben beschriebenen Verfahren zur rechnergestützten Erstellung eines Prognosemodells betrifft die Erfindung ein Verfahren zur Prognose von einer oder mehreren Zielgrößen, wobei die Zielgröße oder Zielgrößen einen Zielvektor bilden, dem ein Eingangsvektor aus einer oder mehreren Eingangsgrößen zugeordnet ist, und wobei mittels eines Prognosemodells, das mit dem oben beschriebenen Verfahren erstellt worden ist oder erstellt wird, die Zielgröße oder Zielgrößen des Zielvektors basierend auf der oder den Eingangsgrößen des zugeordneten Eingangsvektors prognostiziert werden. Das Prognosemodell kann bei der Durchführung des Prognoseverfahrens bereits erstellt sein oder die Erstellung des Prognosemodells kann Bestandteil des Prognoseverfahrens sein.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Die Erfindung umfasst ferner ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

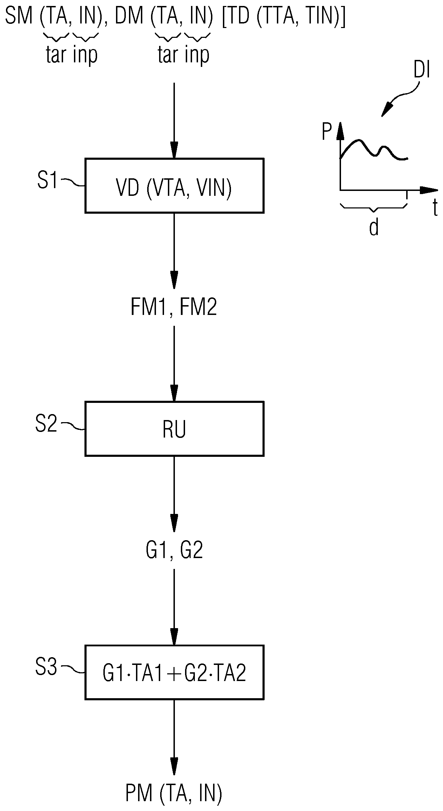

Ein Ausführungsbeispiel der Erfindung wird nachfolgend anhand der beigefügten Fig. 1 detailliert beschrieben. Diese Figur zeigt ein Flussdiagramm, das den Ablauf einer Variante des erfindungsgemäßen Verfahrens verdeutlicht.

Das im Folgenden beschriebene Verfahren ermöglicht die Prognose eines Zielvektors aus einer oder mehreren Zielgrößen basierend auf einem entsprechenden Eingangsvektor aus einer oder mehreren Eingangsgrößen. Die Zielgrößen bzw. Eingangsgrößen stellen entsprechende Variablen dar und eine Prognose erfolgt für eine Wertebelegung der Eingangsgrößen des Eingangsvektors, für die eine entsprechende Wertebelegung der Zielgrößen des Zielvektors ermittelt wird. Das Verfahren kann dabei für beliebige Daten zum Einsatz kommen. Nachfolgend wird auf die Verwendung des Verfahrens zur Prognose der Stromleistung einer Photovoltaikanlage beispielhaft Bezug genommen.

Ausgangspunkt des Verfahrens der Fig. 1 ist ein simulationsbasiertes Modell SM, welches analytisch, z.B. basierend auf physikalischem Wissen, Zusammenhänge zwischen Zielvektoren und zugeordneten Eingangsvektoren beschreibt. Mit dem simulationsbasierten Modell SM kann ein Zielvektor TA mit einer oder mehreren Zielgrößen tar (d.h. mit Werten der entsprechenden Zielgrößen) basierend auf einem zugeordneten Eingangsvektor IN mit entsprechenden Eingangsgrößen inp (d.h. entsprechenden Werten dieser Eingangsgrößen) vorhergesagt werden.

Neben diesem simulationsbasierten Modell SM verwendet das Verfahren der Fig. 1 ein datengetriebenes Modell, das mit DM bezeichnet ist, und analog zum simulationsbasierten Modell SM einen Zielvektor TA mit Zielgrößen tar basierend auf einem zugeordneten Eingangsvektor IN mit Eingangsgrößen inp vorhersagt. Im Unterschied zum simulationsbasierten Modell wurde das datengetriebene Modell DM mit entsprechenden Trainingsdatensätzen TD gelernt, die in Fig. 1 in eckigen Klammern neben dem datengetriebenen Modell angegeben sind. Ein jeweiliger Trainingsdatensatz TD enthält dabei einen beobachteten Zielvektor TTA mit einer entsprechenden Wertebelegung der Zielgrößen sowie einen zugeordneten beobachteten Eingangsvektor TIN mit einer entsprechenden Wertebelegung der Eingangsgrößen. Die Trainingsdatensätze bestehen somit aus Beobachtungen, bei denen ein Eingangsvektor TIN zu dem entsprechenden Zielvektor TTA geführt hat.

Mit Hilfe des nachfolgend beschriebenen Verfahrens wird basierend auf sog. Validierungsdatensätzen VD bestimmt, wie die Prognosen des simulationsbasierten Modells SM und des datengetriebenen Modells DM kombiniert werden können, um Zielgrößen möglichst gut vorherzusagen. In Analogie zu den Trainingsdatensätzen enthalten die Validierungsdatensätze VD beobachtete Zielvektoren VTA und zugeordnete beobachtete Eingangsvektoren VIN. Bei den Validierungsdatensätzen handelt es sich jedoch um Daten mit anderen Wertebelegungen der Eingangsgrößen als bei den Trainingsdaten.

Bezug nehmend auf das Beispiel einer Photovoltaikanlage können die Validierungsdatensätze VD eine Zeitreihe darstellen, was durch das Diagramm DI in Fig. 1 angedeutet ist. Entlang der Abszisse des Diagramms DI ist die Zeitachse t aufgetragen. Dabei existieren zu einer Vielzahl von aufeinander folgenden Zeitpunkten jeweilige Eingangsvektoren, die zu dem entsprechenden Zeitpunkt vorliegenden Wetterdaten, wie z.B. Umgebungstemperatur und/oder Sonneneinstrahlung, umfassen. Zu jedem Zeitpunkt gehört somit ein Eingangsvektor, wobei aus dem Eingangsvektor ein entsprechender Zielvektor resultiert, der gemäß dem Diagramm DI durch die Ordinate repräsentiert wird und die zum jeweiligen Zeitpunkt erzeugte elektrische Stromleistung P der Photovoltaikanlage darstellt. Gemäß dem Diagramm DI werden die in einem Zeitraum d aufgetretenen Wetterdaten und die daraus resultierenden elektrischen Leistungswerte als Validierungsdatensätze verwendet. Der Zeitraum d stellt z.B. einen Tag von 0 Uhr bis 24 Uhr dar.

In Schritt S1 der Fig. 1 werden mit Hilfe der Validierungsdatensätze VD Prognosefehlermaße FM1 und FM2 abgeleitet. Das Prognosefehlermaß FM1 ist dabei ein aus dem simulationsbasierten Modell SM resultierendes Fehlermaß, wohingegen das Prognosefehlermaß FM2 ein aus dem datengetriebenen Modell DM resultierendes Fehlermaß ist. Die entsprechenden Prognosefehlermaße können unterschiedlich definiert werden und Beispiele für solche Fehlermaße wurden weiter oben genannt. Generell hängen die Prognosefehlermaße von entsprechenden Prognosefehlern ab, die sich daraus ergeben, dass für jeweilige Eingangsvektoren VIN prognostizierte Zielvektoren mit den entsprechenden beobachteten Zielvektoren VTA verglichen werden.

In der hier beschriebenen Ausführungsform werden jeweils Skalare von Prognosefehlermaßen FM1 und FM2 betrachtet, wobei das Prognosefehlermaß FM1 den Mittelwert der Prognosefehler des simulationsbasierten Modells SM über die Validierungsdatensätze VD darstellt und das Prognosefehlermaß FM2 den Mittelwert der Prognosefehler des datengetriebenen Modells DM über die Validierungsdatensätze VD darstellt. Das Prognosefehlermaß kann je nach Ausgestaltung vorzeichenbehaftet oder auch nicht vorzeichenbehaftet sein. Im letzteren Fall stellt das Prognosefehlermaß einen Betragswert dar, z.B. den mittleren quadratischen Prognosefehler. In der hier betrachteten Ausführungsform werden Prognosefehlermaße in der Form von Betragswerten betrachtet.

Nach Bestimmung der Prognosefehlermaße FM1 und FM2 wird in Schritt S2 der Fig. 1 eine vorgegebene Regel RU angewendet, um hieraus Gewichte G1 und G2 zu ermitteln. In der hier beschriebenen Ausführungsform ist die Regel derart festgelegt, dass das erste Gewicht G1 auf Null und das zweite Gewicht G2 auf Eins gesetzt wird, wenn das Prognosefehlermaß FM1 größer als das Prognosefehlermaß FM2 ist. Analog wird das erste Gewicht auf Eins und das zweite Gewicht auf Null gesetzt, wenn das erste Prognosefehlermaß FM1 kleiner als das zweite Prognosefehlermaß FM2 ist. Mit anderen Worten wird in Abhängigkeit davon, welches Prognosefehlermaß kleiner ist, entschieden, ob das simulationsbasierte oder das datengetriebene Modell zur Prognose eines Zielvektors verwendet wird, wie im Folgenden noch erläutert wird.

Die soeben beschriebene Bestimmung der Gewichte G1 und G2 ist lediglich beispielhaft und ggf. können die Gewichte auch in anderer Weise bestimmt werden. Insbesondere können beide Gewichte auch Werte von ungleich Null aufweisen. Gegebenenfalls können die Gewichte auch in Abhängigkeit von einem Merkmal des zu prognostizierenden Zielvektors bestimmt werden. Betrachtet man das Beispiel einer Photovoltaikanlage, kann ein solches Merkmal den Zeitpunkt darstellen, zu dem eine durch die Photovoltaikanlage erzeugte Stromleistung zu prognostizieren ist. In diesem Fall können als Prognosefehlermaße FM1 und FM2 die zeitlichen Verläufe der Prognosefehler in den Validierungsdatensätzen betrachtet werden. Die jeweiligen Gewichte G1 und G2 werden dann in Abhängigkeit von denjenigen Prognosefehlern bestimmt, die sich auf den gleichen Tageszeitpunkt in den Validierungsdatensätzen beziehen, für den auch der betrachtete Zielvektor prognostiziert werden soll.

Nach Bestimmung der Gewichte G1 und G2 wird in einem Schritt S3 die Bestimmung des zu prognostizierenden Zielvektors basierend auf der Kombination G1 ·TA1 + G2 ·TA2 festgelegt. TA1 ist dabei der über das simulationsbasierte Modell SM prognostizierte Zielvektor und TA2 ist der über das datengetriebene Modell DM prognostizierte Zielvektor. Diese werden mit den Gewichten G1 und G2 gewichtet und summiert. Als Ergebnis des Schritts S3 wird somit ein Prognosemodell PM geschaffen, das über eine geeignete Kombination eines simulationsbasierten Modells mit einem datengetriebenen Modell einen jeweiligen Zielvektor TA basierend auf einem zugeordneten Eingangsvektor IN prädiziert. Durch die Verarbeitung von Prognosefehlern wird dabei in geeigneter Weise berücksichtigt, ob das simulationsbasierte Modell SM oder das datengetriebene Modell DM besser für eine entsprechende Prognose geeignet sind. Auf diese Weise kann die Qualität der Prognose verbessert werden.

Die mit dem Prognosemodell PM gemachten Prognosen können z.B. direkt zur Steuerung eines technischen Systems verwendet werden, sofern das Prognosemodell Zielgrößen eines technischen Systems vorhersagt. Das Prognosemodell kann jedoch auch zur Vorhersage beliebiger anderer Zielgrößen vorgesehen sein, die keinen Zusammenhang zu einem technischen System aufweisen.

In einer bevorzugten Ausführungsform werden die mit dem Prognosemodell gemachten Prognosen über eine geeignete Benutzerschnittstelle vorzugsweise visuell ausgegeben. Dabei können ggf. auch Ergebnisse der Prognosen des simulationsbasierten Modells und des datengetriebenen Modells ausgegeben werden, so dass ein Nutzer die verschiedenen Modellen visuell vergleichen kann. Gegebenenfalls kann der Benutzer auch die Möglichkeit haben, auf bestimmte Parameter des erfindungsgemäßen Verfahrens mit geeigneter Interaktion an der Benutzerschnittstelle einzuwirken, um hierdurch die Prognose weiter zu verbessern.

In einer weiteren Variante des erfindungsgemäßen Verfahrens geben das simulationsbasierte Modell und das datengetriebene Modell jeweils auch ein Schwankungsmaß für den jeweiligen prognostizierten Zielvektor aus. Dieses Schwankungsmaß gibt eine Konfidenz an, wie gut dem entsprechenden prognostizierten Zielvektor vertraut werden kann. Mit anderen Worten spiegelt das Schwankungsmaß die Unsicherheit in der Vorhersage des Zielvektors wider. Dieses Schwankungsmaß kann in einer Modifikation des erfindungsgemäßen Verfahrens auch bei der Ermittlung der Gewichte G1 und G2 berücksichtigt werden, wobei das Gewicht G1 umso kleiner gewählt wird, je größer das Schwankungsmaß des simulationsbasierten Modells ist, und das Gewicht G2 umso kleiner gewählt wird, je größer das Schwankungsmaß des datengetriebenen Modells ist. Hierdurch werden sichere Prognosen gegenüber unsicheren Prognosen bevorzugt.

## Patentansprüche

1. Verfahren zur rechnergestützten Erstellung eines Prognosemodells (PM) zur Prognose von einer oder mehreren Zielgrößen (tar), wobei die Zielgröße oder Zielgrößen (tar) einen Zielvektor (TA) bilden, dem ein Eingangsvektor (IN) aus einer oder mehreren Eingangsgrößen (inp) zugeordnet ist, und wobei mittels des Prognosemodells (PM) die Zielgröße oder Zielgrößen (tar) des Zielvektors (TA) basierend auf der oder den Eingangsgrößen (inp) des zugeordneten Eingangsvektors (IN) prognostiziert werden können, wobei das Prognosemodell (PM) dazu eingerichtet ist, eine oder mehrere Zielgrößen (tar) eines technischen Systems basierend auf einer oder mehreren Eingangsgrößen (inp) des technischen Systems vorherzusagen, **dadurch gekennzeichnet dass**:
- ein simulationsbasiertes Modell (SM) und ein datengetriebenes Modell (DM) zur Prognose eines Zielvektors (TA) basierend auf einem zugeordneten Eingangsvektor (IN) bereitgestellt werden, wobei das simulationsbasierte Modell (SM) den Zusammenhang zwischen Zielvektoren (TA) und zugeordneten Eingangsvektoren (IN) analytisch modelliert und das datengetriebene Modell (DM) basierend auf einer Mehrzahl von Trainingsdatensätzen (TD), die jeweils einen beobachteten Zielvektor (TTA) und einen zugeordneten beobachteten Eingangsvektor (TIN) umfassen, gelernt ist;
- basierend auf einer Mehrzahl von Validierungsdatensätzen (VD), die jeweils einen beobachteten Zielvektoren (VTA) und einen zugeordneten beobachteten Eingangsvektor (VIN) umfassen, ein erstes Prognosefehlermaß (FM1) für das simulationsbasierte Modell (SM) umfassend einen oder mehrere Fehlerwerte ermittelt wird, wobei das erste Prognosefehlermaß (FM1) von jeweiligen Prognosefehlern des simulationsbasierten Modells (SM) für jeweilige Validierungsdatensätze (VD) der Mehrzahl von Validierungsdatensätzen (VD) abhängt;
- basierend auf der Mehrzahl von Validierungsdatensätzen (VD) ein zweites Prognosefehlermaß (FM2) für das datengetriebene Modell (DM) umfassend einen oder mehrere Fehlerwerte ermittelt wird, wobei das zweite Prognosefehlermaß (FM2) von jeweiligen Prognosefehlern des datengetriebenen Modells (DM) für jeweilige Validierungsdatensätze (VD) der Mehrzahl von Validierungsdatensätzen (VD) abhängt;
- basierend auf einer vorgegebenen Regel (RU), die von dem ersten und dem zweiten Prognosefehlermaß (FM1, FM2) abhängt, ein erstes Gewicht (G1) und ein zweites Gewicht (G2) bestimmt werden und das Prognosemodell (PM) derart festgelegt wird, dass ein durch das Prognosemodell (PM) prognostizierter Zielvektor (TA) eine gewichtete Kombination ist, die gebildet ist aus einem ersten Vektor (TA1) in der Form eines Zielvektors (TA), der mit dem simulationsbasierten Modell (SM) aus dem zugeordneten Eingangsvektor (IN) prognostiziert wird, und einem zweiten Vektor (TA2) in der Form eines Zielvektors (TA), der mit dem datengetriebenen Modell (DM) aus dem zugeordneten Eingangsvektor (IN) prognostiziert wird, wobei der erste Vektor (TA1) mit dem ersten Gewicht (G1) und der zweite Vektor (TA2) mit dem zweiten Gewicht (G2) gewichtet ist.

2. Verfahren nach Anspruch 1, wobei das erste und/oder das zweite Prognosefehlermaß (FM1, FM2) jeweils als Fehlerwerte die Menge aller Prognosefehler des simulationsbasierten bzw. des datengetriebenen Modells (SM, DM) für die Mehrzahl von Validierungsdatensätzen (VD) enthält oder das erste und/oder das zweite Prognosefehlermaß (FM1, FM2) jeweils als Fehlerwert einen Mittelwert der Prognosefehler des simulationsbasierten bzw. des datengetriebenen Modells (SM, DM) für die Mehrzahl von Validierungsdatensätzen (VD) enthält oder das erste und/oder das zweite Prognosefehlermaß (FM1, FM2) jeweils mehrere Mittelwerte der Prognosefehler des simulationsbasierten bzw. des datengetriebenen Modells (SM, DM) enthält, wobei die jeweiligen Mittelwerte über jeweilige Teilmengen der Mehrzahl von Validierungsdatensätzen (VD) gemittelt sind.

3. Verfahren nach Anspruch 1 oder 2, wobei die vorgegebene Regel (RU) auch von einem vorbekannten Merkmal des durch das Prognosemodell (PM) zu prognostizierenden Zielvektors (TA) abhängt, wobei das vorbekannte Merkmal keine Zielgröße (tar) darstellt.

4. Verfahren nach einem der vorhergehenden Ansprüche, wobei jedem Zielvektor (TA, TTA, VTA) jeweils ein Zeitpunkt seines Auftretens zugeordnet ist.

5. Verfahren nach Anspruch 3 und 4, wobei der Zeitpunkt des Auftretens des durch das Prognosemodell (PM) zu prognostizierenden Zielvektors (TA) das vorbekannte Merkmal darstellt.

6. Verfahren nach Anspruch 4 oder 5, wobei sich die Zeitpunkte des Auftretens der jeweiligen Zielvektoren (TA, TTA, VTA) periodisch wiederholen.

7. Verfahren nach Anspruch 5 und 6, wobei das erste und/oder das zweite Prognosefehlermaß (FM1, FM2) jeweils als Fehlerwerte die Menge aller Prognosefehler des simulationsbasierten bzw. datengetriebenen Modells (SM, DM) für die Mehrzahl von Validierungsdatensätzen (VD) enthalten, wobei die vorgegebene Regel (RU) zur Bestimmung des ersten und zweiten Gewichts (G1, G2) solche Fehlerwerte aus dem ersten und zweiten Prognosefehlermaß (FM1, FM2) berücksichtigt, die zu einem Zielvektor (VTA) in der Mehrzahl von Validierungsdatensätzen (VD) gehören, der den gleichen Zeitpunkt des Auftretens wie der zu prognostizierende Zielvektor (TA) hat.

8. Verfahren nach einem der Ansprüche 4 bis 7, wobei der Eingangsvektor (IN), der einem durch das Prognosemodell (PM) zu prognostizierenden Zielvektor (TA) zugeordnet ist, eine oder mehrere prädizierte Eingangsgrößen (IN) umfasst, die für den Zeitpunkt des Auftretens des Zielvektors (TA) prädiziert sind.

9. Verfahren nach einem der vorhergehenden Ansprüche, wobei die vorgegebene Regel (RU) derart ausgestaltet ist, dass für jeden durch das Prognosemodell (PM) zu prognostizierenden Zielvektor (TA) oder bei Vorliegen einer vorgegebenen Bedingung das erste Gewicht (G1) und zweite Gewicht (G2) derart festgelegt werden, dass das erste Gewicht (G1) auf Eins und das zweite Gewicht (G2) auf Null gesetzt wird, wenn der oder ein Fehlerwert des ersten Prognosefehlermaßes (FM1) betragsmäßig kleiner als der oder ein entsprechender Fehlerwert des zweiten Prognosefehlermaßes (FM2) ist, und das erste Gewicht (G1) auf Null und das zweite Gewicht (G2) auf Eins gesetzt wird, wenn der oder ein Fehlerwert des ersten Prognosefehlermaßes (FM1) betragsmäßig größer als der oder ein entsprechender Fehlerwert des zweiten Prognosefehlermaßes (FM2) ist.

10. Verfahren nach Anspruch 9, wobei die vorgegebene Bedingung dann vorliegt, wenn die zur Bestimmung des ersten und zweiten Gewichts (G1, G2) miteinander verglichenen Fehlerwerte das gleiche Vorzeichen aufweisen.

11. Verfahren nach einem der vorhergehenden Ansprüche, wobei die vorgegebene Regel (RU) derart ausgestaltet ist, dass für jeden durch das Prognosemodell (PM) zu prognostizierenden Zielvektor (TA) oder bei Vorliegen einer vorbestimmten Bedingung das erste Gewicht (G1) und zweite Gewicht (G2) mit einer Rechenvorschrift bestimmt werden, gemäß der das erste Gewicht (G1) umso größer wird, je kleiner der Betrag des oder eines Fehlerwerts des ersten Prognosefehlermaßes (FM1) wird, und gemäß der das zweite Gewicht (G2) umso größer wird, je kleiner der Betrag des oder eines Fehlerwerts des zweiten Prognosefehlermaßes (FM2) wird.

12. Verfahren nach Anspruch 11, wobei die vorbestimmte Bedingung dann vorliegt, wenn die zur Bestimmung des ersten und zweiten Gewichts (G1, G2) miteinander verglichenen Fehlerwerte unterschiedliche Vorzeichen aufweisen.

13. Verfahren nach einem der vorhergehenden Ansprüche, wobei das simulationsbasierte Modell (SM) ein erstes Schwankungsmaß für den prognostizierten ersten Vektor (TA1) ausgibt und das datengetriebene Modell (DM) ein zweites Schwankungsmaß für den prognostizierten zweiten Zielvektor (TA2) ausgibt, wobei die vorgegebene Regel (RU) ferner von dem ersten und zweiten Schwankungsmaß abhängt.

14. Verfahren nach Anspruch 13, wobei das erste Gewicht (G1) mit zunehmenden ersten Schwankungsmaß abnimmt und das zweite Gewicht (G2) mit zunehmenden zweiten Schwankungsmaß abnimmt.

15. Verfahren nach einem der vorhergehenden Ansprüche, wobei das simulationsbasierte Modell (SM) physikalische Zusammenhänge zwischen Zielvektoren (TA) und zugeordneten Eingangsvektoren (IN) beschreibt und/oder das datengetriebene Modell (DM) ein oder mehrere neuronale Netze umfasst.

16. Verfahren nach einem der vorhergehenden Ansprüche, **dadurch gekennzeichnet, dass** das technische System eine Energieerzeugungsanlage und insbesondere eine regenerative Energieerzeugungsanlage ist.

17. Verfahren nach Anspruch 16, wobei der mit dem Prognosemodell (PM) zu prognostizierende Zielvektor (TA) als eine Zielgröße (tar) die durch die regenerative Energieerzeugungsanlage erzeugte Stromleistung zu einem zukünftigen Zeitpunkt umfasst und der zugeordnete Eingangsvektors (IN) als eine oder mehrere Eingangsgrößen (inp) zu dem zukünftigen Zeitpunkt vorliegende Wetterdaten umfasst.

18. Verfahren zur Prognose von einer oder mehreren Zielgrößen (tar), wobei die Zielgröße oder Zielgrößen (tar) einen Zielvektor (TA) bilden, dem ein Eingangsvektor (IN) aus einer oder mehreren Eingangsgrößen (inp) zugeordnet ist, und wobei mittels eines Prognosemodells (PM), das mit einem Verfahren nach einem der vorhergehenden Ansprüche erstellt worden ist oder erstellt wird, die Zielgröße oder Zielgrößen (tar) des Zielvektors (TA) basierend auf der oder den Eingangsgrößen (inp) des zugeordneten Eingangsvektors (IN) prognostiziert werden.

19. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

20. Computerprogramm mit einem Programmcode zur Durchführung eines Verfahrens nach einem der Ansprüche 1 bis 18, wenn der Programmcode auf einem Computer ausgeführt wird.

## Claims

1. Method for the computer-aided creation of a forecast model (PM) for forecasting one or more target variables (tar), wherein the target variable(s) (tar) form(s) a target vector (TA) which is assigned an input vector (IN) from one or more input variables (inp), and wherein the target variable(s) (tar) of the target vector (TA) can be forecast by means of the forecast model (PM) on the basis of the input variable(s) (inp) of the assigned input vector (IN), wherein the forecast model (PM) is configured to forecast one or more target variables (tar) of a technical system on the basis of one or more input variables (inp) of the technical system, **characterized in that**:
- a simulation-based model (SM) and a data-driven model (DM) are provided for the purpose of forecasting a target vector (TA) on the basis of an assigned input vector (IN), wherein the simulation-based model (SM) analytically models the relationship between target vectors (TA) and assigned input vectors (IN) and the data-driven model (DM) is trained on the basis of a plurality of training data sets (TD) each comprising an observed target vector (TTA) and an assigned observed input vector (TIN);
- a first forecast error measure (FM1) is determined for the simulation-based model (SM) comprising one or more error values on the basis of a plurality of validation data sets (VD) each comprising an observed target vector (VTA) and an assigned observed input vector (VIN), wherein the first forecast error measure (FM1) depends on respective forecast errors of the simulation-based model (SM) for respective validation data sets (VD) of the plurality of validation data sets (VD);
- a second forecast error measure (FM2) is determined for the data-driven model (DM) comprising one or more error values on the basis of the plurality of validation data sets (VD), wherein the second forecast error measure (FM2) depends on respective forecast errors of the data-driven model (DM) for respective validation data sets (VD) of the plurality of validation data sets (VD);
- a first weight (G1) and a second weight (G2) are determined on the basis of a predefined rule (RU) which depends on the first and second forecast error measures (FM1, FM2), and the forecast model (PM) is determined in such a manner that a target vector (TA) forecast by means of the forecast model (PM) is a weighted combination formed from a first vector (TA1) in the form of a target vector (TA), which is forecast from the assigned input vector (IN) using the simulation-based model (SM), and a second vector (TA2) in the form of a target vector (TA), which is forecast from the assigned input vector (IN) using the data-driven model (DM), wherein the first vector (TA1) is weighted with the first weight (G1) and the second vector (TA2) is weighted with the second weight (G2).

2. Method according to Claim 1, wherein the first and/or the second forecast error measure (FM1, FM2) respectively contain(s), as error values, the set of all forecast errors of the simulation-based or data-driven model (SM, DM) for the plurality of validation data sets (VD), or the first and/or the second forecast error measure (FM1, FM2) respectively contain(s), as error value, a mean value of the forecast errors of the simulation-based or data-driven model (SM, DM) for the plurality of validation data sets (VD), or the first and/or the second forecast error measure (FM1, FM2) respectively contain(s) a plurality of mean values of the forecast errors of the simulation-based or data-driven model (SM, DM), wherein the respective mean values are averaged over respective subsets of the plurality of validation data sets (VD) .

3. Method according to Claim 1 or 2, wherein the predefined rule (RU) also depends on a previously known feature of the target vector (TA) to be forecast by means of the forecast model (PM), wherein the previously known feature is not a target variable (tar).

4. Method according to one of the preceding claims, wherein a time of its occurrence is respectively assigned to each target vector (TA, TTA, VTA).

5. Method according to Claims 3 and 4, wherein the time of occurrence of the target vector (TA) to be forecast by means of the forecast model (PM) is the previously known feature.

6. Method according to Claim 4 or 5, wherein the times of occurrence of the respective target vectors (TA, TTA, VTA) repeat periodically.

7. Method according to Claims 5 and 6, wherein the first and/or the second forecast error measure (FM1, FM2) respectively contain(s), as error values, the set of all forecast errors of the simulation-based or data-driven model (SM, DM) for the plurality of validation data sets (VD), wherein the predefined rule (RU), in order to determine the first and second weights (G1, G2), takes into account those error values from the first and second forecast error measures (FM1, FM2) which belong to a target vector (VTA) in the plurality of validation data sets (VD) which has the same time of occurrence as the target vector (TA) to be forecast.

8. Method according to one of Claims 4 to 7, wherein the input vector (IN) assigned to a target vector (TA) to be forecast by means of the forecast model (PM) comprises one or more predicted input variables (IN) which have been predicted for the time of occurrence of the target vector (TA).

9. Method according to one of the preceding claims, wherein the predefined rule (RU) is configured in such a manner that the first weight (G1) and the second weight (G2) are determined for each target vector (TA) to be forecast by means of the forecast model (PM) or if a predefined condition is present in such a manner that the first weight (G1) is set to one and the second weight (G2) is set to zero if the or an error value of the first forecast error measure (FM1) is less than the or a corresponding error value of the second forecast error measure (FM2) in terms of magnitude, and the first weight (G1) is set to zero and the second weight (G2) is set to one if the or an error value of the first forecast error measure (FM1) is greater than the or a corresponding error value of the second forecast error measure (FM2) in terms of magnitude.

10. Method according to Claim 9, wherein the predefined condition is present when the error values compared with one another in order to determine the first and second weights (G1, G2) have the same sign.

11. Method according to one of the preceding claims, wherein the predefined rule (RU) is configured in such a manner that the first weight (G1) and the second weight (G2) are determined for each target vector (TA) to be forecast by means of the forecast model (PM) or if a predetermined condition is present using a calculation rule, according to which the first weight (G1) becomes greater, the smaller the magnitude of the or an error value of the first forecast error measure (FM1), and according to which the second weight (G2) becomes greater, the smaller the magnitude of the or an error value of the second forecast error measure (FM2).

12. Method according to Claim 11, wherein the predetermined condition is present when the error values compared with one another in order to determine the first and second weights (G1, G2) have different signs.

13. Method according to one of the preceding claims, wherein the simulation-based model (SM) outputs a first fluctuation measure for the forecast first vector (TA1) and the data-driven model (DM) outputs a second fluctuation measure for the forecast second target vector (TA2), wherein the predefined rule (RU) also depends on the first and second fluctuation measures.

14. Method according to Claim 13, wherein the first weight (G1) decreases with an increasing first fluctuation measure and the second weight (G2) decreases with an increasing second fluctuation measure.

15. Method according to one of the preceding claims, wherein the simulation-based model (SM) describes physical relationships between target vectors (TA) and assigned input vectors (IN) and/or the data-driven model (DM) comprises one or more neural networks.

16. Method according to one of the preceding claims, **characterized in that** the technical system is an energy generation plant and, in particular, a regenerative energy generation plant.

17. Method according to Claim 16, wherein the target vector (TA) to be forecast using the forecast model (PM) comprises, as a target variable (tar), the power output generated by the regenerative energy generation plant at a future time and the assigned input vector (IN) comprises, as one or more input variables (inp), weather data available at the future time.

18. Method for forecasting one or more target variables (tar), wherein the target variable(s) (tar) form(s) a target vector (TA) which is assigned an input vector (IN) from one or more input variables (inp), and wherein the target variable(s) (tar) of the target vector (TA) is/are forecast on the basis of the input variable(s) (inp) of the assigned input vector (IN) by means of a forecast model (PM) which has been or is created using a method according to one of the preceding claims.

19. Computer program product having a program code which is stored on a machine-readable carrier and is intended to carry out a method according to one of the preceding claims when the program code is executed on a computer.

20. Computer program having a program code for carrying out a method according to one of Claims 1 to 18 when the program code is executed on a computer.

## Revendications

1. Procédé de création assistée par ordinateur d'un modèle pronostique (PM) destiné au pronostic d'une ou plusieurs grandeurs cibles (tar), dans lequel la ou les grandeurs cibles (tar) forment un vecteur cible (TA) auquel correspond un vecteur d'entrée (IN) issu d'une ou plusieurs grandeurs d'entrée (inp), et dans lequel au moyen du modèle pronostique (PM), la ou les grandeurs cibles (tar) du vecteur cible (TA) peuvent être pronostiquées en se basant sur la ou les grandeurs d'entrée (inp) du vecteur d'entrée (IN) correspondant, dans lequel le modèle pronostique (PM) est conçu pour prédire une ou plusieurs grandeurs cibles (tar) d'un système technique en se basant sur une ou plusieurs grandeurs d'entrée (inp) du système technique,
**caractérisé en ce que** :
- un modèle basé sur simulation (SM) et un modèle fonctionnant sur données (DM) sont prévus pour le pronostic d'un vecteur cible (TA) en se basant sur un vecteur d'entrée (IN) correspondant, dans lequel le modèle basé sur simulation (SM) modélise de manière analytique le rapport entre des vecteurs cibles (TA) et des vecteurs d'entrée (IN) correspondants, et le modèle fonctionnant sur données (DM) est appris en se basant sur une pluralité de jeux de données de formation (TD) qui comprennent respectivement un vecteur cible observé (TTA) et un vecteur d'entrée observé (TIN) correspondant ;
- en se basant sur une pluralité de jeux de données de validation (VD) qui comprennent respectivement un vecteur cible observé (VTA) et un vecteur d'entrée observé (VIN) correspondant, une première mesure d'erreur de pronostic (FM1) pour le modèle basé sur simulation (SM) comprenant une ou plusieurs valeurs d'erreur est calculée, dans lequel la première mesure d'erreur de pronostic (FM1) dépend des erreurs de pronostic respectives du modèle basé sur simulation (SM) pour des jeux de données de validation (VD) respectifs de la pluralité de jeux de données de validation (VD) ;
- en se basant sur la pluralité de jeux de données de validation (VD), une deuxième mesure d'erreur de pronostic (FM2) pour le modèle fonctionnant sur données (DM) comprenant une ou plusieurs valeurs d'erreur est calculée, dans lequel la deuxième mesure d'erreur de pronostic (FM2) dépend des erreurs de pronostic respectives du modèle fonctionnant sur données (DM) pour des jeux de données de validation (VD) respectifs de la pluralité de jeux de données de validation (VD) ;
- en se basant sur une règle (RU) prédéfinie qui dépend des première et deuxième mesures d'erreur de pronostic (FM1, FM2), un premier poids (G1) et un deuxième poids (G2) sont déterminés et le modèle pronostique (PM) est ainsi défini qu'un vecteur cible (TA) pronostiqué par le modèle pronostique (PM) est une combinaison pondérée qui est formée d'un premier vecteur (TA1) sous forme d'un vecteur cible (TA) qui est pronostiqué avec le modèle basé sur simulation (SM) à partir du vecteur d'entrée (IN) correspondant, et d'un deuxième vecteur (TA2) sous forme d'un vecteur cible (TA) qui est pronostiqué avec le modèle fonctionnant sur données (DM) à partir du vecteur d'entrée (IN) correspondant, dans lequel le premier vecteur (TA1) est pondéré avec le premier poids (G1) et le deuxième vecteur (TA2) est pondéré avec le deuxième poids (G2).

2. Procédé selon la revendication 1, dans lequel la première et/ou la deuxième mesure d'erreur de pronostic (FM1, FM2) contient respectivement en tant que valeurs d'erreur, la quantité de toutes les erreurs de pronostic du modèle basé sur simulation, respectivement du modèle fonctionnant sur données (SM, DM) pour la pluralité de jeux de données de validation (VD) ou bien la première et/ou la deuxième mesure d'erreur de pronostic (FM1, FM2) contient respectivement en tant que valeur d'erreur une valeur moyenne des erreurs de pronostic du modèle basé sur simulation, respectivement du modèle fonctionnant sur données (SM, DM) pour la pluralité de jeux de données de validation (VD) ou bien la première et/ou la deuxième mesure d'erreur de pronostic (FM1, FM2) contient respectivement plusieurs valeurs moyennes des erreurs de pronostic du modèle basé sur simulation, respectivement du modèle fonctionnant sur données (SM, DM), dans lequel les valeurs moyennes respectives sont moyennées sur des quantités partielles respectives de la pluralité de jeux de données de validation (VD).

3. Procédé selon la revendication 1 ou 2, dans lequel la règle prédéfinie (RU) dépend également d'une caractéristique pré-connue du vecteur cible (TA) à pronostiquer avec le modèle pronostique (PM), dans lequel la caractéristique pré-connue ne représente aucune grandeur cible (tar).

4. Procédé selon l'une des revendications précédentes, dans lequel à chaque vecteur cible (TA, TTA, VTA) correspond respectivement un instant de sa survenue.

5. Procédé selon la revendication 3 et 4, dans lequel l'instant de survenue du vecteur cible (TA) à pronostiquer avec le modèle pronostique (PM) représente la caractéristique pré-connue.

6. Procédé selon la revendication 4 ou 5, dans lequel les instants de survenue des vecteurs cibles (TA, TTA, VTA) respectifs se répètent de manière périodique.

7. Procédé selon la revendication 5 et 6, dans lequel la première et/ou la deuxième mesure d'erreur de pronostic (FM1, FM2) contient respectivement en tant que valeurs d'erreur, la quantité de toutes les erreurs de pronostic du modèle basé sur simulation, respectivement du modèle fonctionnant sur données (SM, DM) pour la pluralité de jeux de données de validation (VD), dans lequel la règle prédéfinie (RU) pour déterminer le premier et le deuxième poids (G1, G2) tient compte de telles valeurs d'erreur issues de la première et deuxième mesure d'erreur de pronostic (FM1, FM2) qui appartiennent à un vecteur cible (VTA) dans la pluralité de jeux de données de validation (VD) qui a le même instant de survenue que le vecteur cible (TA) à pronostiquer.

8. Procédé selon l'une des revendications 4 à 7, dans lequel le vecteur d'entrée (IN) auquel correspond un vecteur cible (TA) à pronostiquer avec le modèle pronostique (PM), comprend une ou plusieurs grandeurs d'entrée (IN) prédites qui sont prédites pour l'instant de survenue du vecteur cible (TA) .

9. Procédé selon l'une des revendications précédentes, dans lequel la règle prédéfinie (RU) est ainsi conçue que pour chaque vecteur cible (TA) à pronostiquer avec le modèle pronostique (PM) ou en présence d'une condition prédéfinie, le premier poids (G1) et le deuxième poids (G2) sont ainsi déterminés que le premier poids (G1) est placé sur un et le deuxième poids (G2) est placé sur zéro, lorsque la ou une valeur d'erreur de la première mesure d'erreur de pronostic (FM1) est plus petite en termes de valeur absolue que la ou une valeur d'erreur correspondante de la deuxième mesure d'erreur de pronostic (FM2), et le premier poids (G1) est placé sur zéro et le deuxième poids (G2) est placé sur un, lorsque la ou une valeur d'erreur de la première mesure d'erreur de pronostic (FM1) est plus grande en termes de valeur absolue que la ou une valeur d'erreur correspondante de la deuxième mesure d'erreur de pronostic (FM2).

10. Procédé selon la revendication 9, dans lequel la condition prédéfinie est présente lorsque les valeurs d'erreur comparées entre elles pour déterminer le premier et le deuxième poids (G1, G2) présentent le même signe.

11. Procédé selon l'une des revendications précédentes, dans lequel la règle prédéfinie (RU) est ainsi conçue que pour chaque vecteur cible (TA) à pronostiquer avec le modèle pronostique (PM) ou en présence d'une condition prédéfinie, le premier poids (G1) et le deuxième poids (G2) sont déterminés avec une règle de calcul selon laquelle le premier poids (G1) est d'autant plus grand que la valeur absolue de la ou d'une valeur d'erreur de la première mesure d'erreur de pronostic (FM1) est petite, et selon laquelle le deuxième poids (G2) est d'autant plus grand que la valeur absolue de la ou d'une valeur d'erreur de la deuxième mesure d'erreur de pronostic (FM2) est petite.

12. Procédé selon la revendication 11, dans lequel la condition prédéfinie est présente lorsque les valeurs d'erreur comparées entre elles pour déterminer le premier et le deuxième poids (G1, G2) présentent des signes différents.

13. Procédé selon l'une des revendications précédentes, dans lequel le modèle basé sur simulation (SM) fournit une première mesure de fluctuation pour le premier vecteur (TA1) pronostiqué et le modèle fonctionnant sur données (DM) fournit une deuxième mesure de fluctuation pour le deuxième vecteur (TA1) pronostiqué, dans lequel la règle prédéfinie (RU) dépend en outre de la première et de la deuxième mesure de fluctuation.

14. Procédé selon la revendication 13, dans lequel le premier poids (G1) décroît à mesure que la première mesure de fluctuation augmente et le deuxième poids (G2) décroît à mesure que la deuxième mesure de fluctuation augmente.

15. Procédé selon l'une des revendications précédentes, dans lequel le modèle basé sur simulation (SM) décrit des relations physiques entre des vecteurs cibles (TA) et des vecteurs d'entrée (IN) correspondants et/ou le modèle fonctionnant sur données (DM) comprend un ou plusieurs réseaux neuronaux.

16. Procédé selon l'une des revendications précédentes, **caractérisé en ce que** le système technique est une installation de production d'énergie et en particulier une installation de production d'énergie à régénération.

17. Procédé selon la revendication 16, dans lequel le vecteur cible (TA) à pronostiquer avec le modèle pronostique (PM) comprend en tant qu'une grandeur cible (tar), la puissance de courant produite par l'installation de production d'énergie à régénération à un instant futur, et le vecteur d'entrée (IN) correspondant comprend en tant qu'une ou plusieurs grandeurs d'entrée (inp) des données météorologiques présentes à l'instant futur.

18. Procédé pour le pronostic d'une ou plusieurs grandeurs cibles (tar), dans lequel la ou les grandeurs cibles (tar) forment un vecteur cible (TA) auquel correspond un vecteur d'entrée (IN) issu d'une ou plusieurs grandeurs d'entrée (inp), et dans lequel, au moyen d'un modèle pronostique (PM) qui a été établi ou est établi par un procédé selon l'une des revendications précédentes, la ou les grandeurs cibles (tar) du vecteur cible (TA) sont pronostiquées en se basant sur la ou les grandeurs d'entrée (inp) du vecteur d'entrée (IN) correspondant.

19. Produit de programme informatique comprenant un code de programme conservé en mémoire sur un support lisible sur machine pour exécuter un procédé selon l'une des revendications précédentes lorsque le code de programme est exécuté sur un ordinateur.

20. Programme informatique comprenant un code de programme pour exécuter un procédé selon l'une des revendications 1 à 18, lorsque le code de programme est exécuté sur un ordinateur.
